(19) Europäisches Patentamt
European Patent Office
Office européen des brevets

(11) **EP 1 188 642 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.$^7$: **B62D 11/18**

(21) Anmeldenummer: **01119392.7**

(22) Anmeldetag: **11.08.2001**

(54) **Steuerung eines Fahr-/Lenksystems für ein Raupenfahrzeug**

Control of a driving and steering system for a tracked vehicle

Commande d'un système d'entraînement et de direction pour véhicule à chenilles

(84) Benannte Vertragsstaaten:
**AT BE CH CY DE DK ES FI FR GB GR IE IT LI LU MC NL PT SE TR**

(30) Priorität: **23.08.2000 US 648470**

(43) Veröffentlichungstag der Anmeldung:
**20.03.2002 Patentblatt 2002/12**

(73) Patentinhaber: **DEERE & COMPANY**
**Moline, Illinois 61265-8098 (US)**

(72) Erfinder: **Easton, David Joseph**
**Cedar Falls, IA 50613-2021 (US)**

(74) Vertreter: **Lau-Loskill, Philipp, Dipl.-Phys.**
**Deere & Company,**
**European Office,**
**Patent Department**
**68140 Mannheim (DE)**

(56) Entgegenhaltungen:
**EP-A- 1 106 477        US-A- 5 473 541**
**US-A- 6 000 490        US-A- 6 039 132**

**Beschreibung**

Die vorliegende Erfindung betrifft ein Raupenfahrzeug, ein Steuersystem und ein Verfahren zur Steuerung eines Fahr/Lenksystems für ein Raupenfahrzeug gemäß dem Oberbegriff eines der Ansprüche 1, 4 oder 12.

Handelsübliche Raupenfahrzeuge mit hydromechanischen Fahr/Lenksystemen, besitzen eine motorgetriebene hydraulische Lenkpumpe, welche auf durch ein federzentriertes Lenkrad hervorgerufene Lenkpumpen-Kontrollsignale anspricht, und welche einen hydraulischen Lenkmotor antreibt. Der Lenkmotor treibt einen Differential-Raupenantriebsmechanismus an, welcher ein linkes und ein rechtes Raupenfahrwerk antreibt und das Fahrzeug mit einer Wendegeschwindigkeit lenkt, die von der Lenkpumpen-Kontrollsignalgröße und der Fahrzeugmotordrehzahl abhängt. Bei derartigen Systemen ist die Lenkradposition ein direkter Indikator für die Position der Taumelscheibe der Lenkpumpe, daher geht das Maximum der Pumpenkapazität gleichzeitig mit dem Maximum der Lenkraddrehung einher. Obwohl funktional, mangelt es solchen Systemen an verschiedenen Eigenschaften, und Fahrzeuge mit derartigen Systemen fahren nicht wie Automobile oder andere vertraute Fahrzeuge. Zum Beispiel, obwohl die Position des Lenkrades die Position der Taumelscheibe angibt, hängt dennoch der tatsächliche Wendekreis des Fahrzeuges sowohl von der Motordrehzahl als auch der Fahrzeuggeschwindigkeit ab.

Ein Vorschlag für ein elektrohydraulisches Fahr-/Lenksystem eines Raupenfahrzeugs wird in der US-A-6,039,132 beschrieben, die die im Oberbegriff eines der Ansprüche 1, 4 oder 12 definierten Merkmale offenbart. In US-A-6,000,490 wird ein weiteres, ebenfalls elektrohydraulisches Fahr-/Lenksystem für ein Raupenfahrzeug beschrieben, welches ein mit einer variablen Lenk-Reibungs-Eingangsvorrichtung verbundenes nicht-federzentriertes Lenkrad besitzt. Die Lenk-Reibungs-Eingangsvorrichtung erzeugt eine variable zweistufige Reibungskraft, die dem Drehen des Lenkrades einen Reibungswiderstand entgegensetzt, eine Rückmeldung an die Bedienperson liefert, einen Endanschlag der Drehbewegung des Lenkrades simuliert und es damit ermöglicht, dass sich das Raupenfahrzeug ähnlich wie Räderfahrzeuge fahren lässt. Bei diesem vorgeschlagenen System wird der höhere Reibungszustand eingeschaltet, sobald eine gewisse Anzahl von Lenkradumdrehungen erreicht wird, wie es ähnlich bei einem Räderfahrzeug eintritt. Bei einem höheren Gang des Fahrzeuggetriebes wird jedoch das Maximum des Lenkpumpenhubs erreicht, bevor eine entsprechende Anzahl von Lenkradumdrehungen erfolgt ist. Folglich können zusätzliche Lenkradumdrehungen zu keinem engeren Wendekreis führen. Es wäre wünschenswert, der Bedienperson zu signalisieren, wenn dieser Zustand im Begriff ist einzutreten.

Die der Erfindung zugrunde liegende Aufgabe wird darin gesehen, ein Raupenfahrzeug, ein Steuersystem und ein Verfahren zur Steuerung eines Fahr-/Lenksystems für ein Raupenfahrzeug anzugeben, durch welches die vorgenannten Probleme überwunden werden. Insbesondere soll ein elektrohydraulisches Raupenfahrzeug-Lenksystem zur Verfügung gestellt werden, welches die Bedienperson mit einem Signal versorgt, wenn der maximale Lenkpumpenhub erreicht ist, während sich das Getriebe in einem höheren Übersetzungsverhältnis befindet.

Diese Aufgaben werden erfindungsgemäß durch die Lehre eines der Patentansprüche 1, 4 oder 12 gelöst. Weitere vorteilhafte Ausgestaltungen und Weiterbildungen der Erfindung gehen aus den Unteransprüchen hervor.

Gemäß einer bevorzugten Ausgestaltung der Erfindung wird laufend das Verhältnis der gewünschten oder vorgegebenen Lenkkonstantmotordrehzahl zur tatsächlichen Motordrehzahl gebildet und der Verhältniswert mit einem Grenzwert verglichen. Wenn der Verhältniswert den Grenzwert erreicht, so wird angenommen, dass das Maximum des Lenkpumpenhubs nahezu erreicht ist, und es wird eine mit dem Lenkrad verbundene variable Lenk-Reibungs-Eingangsvorrichtung auf einen hohen Reibungswert gesetzt. Dies signalisiert der Bedienperson, dass das Ende der Lenkmöglichkeit erreicht wurde und dass ein engerer Wendekreis unter den vorliegenden Bedingungen nicht erwartet werden kann. Dies ist insbesondere in einem Raupenfahrzeug mit elektrohydraulischem Fahr- und Lenksystem nützlich.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1 das vereinfachte schematische Diagramm eines Fahr- und Lenksystems für ein Raupenfahrzeug, welches für den Einsatz in vorliegender Erfindung vorgesehen ist, und

Fig. 2 das logische Flussdiagramm eines Algorithmus, der durch eine mikroprozessor-unterstützte Steuereinheit des aus Fig. 1 hervorgehenden Steuersystems ausgeführt wird, und ein Ausführungsbeispiel der vorliegenden Erfindung realisiert.

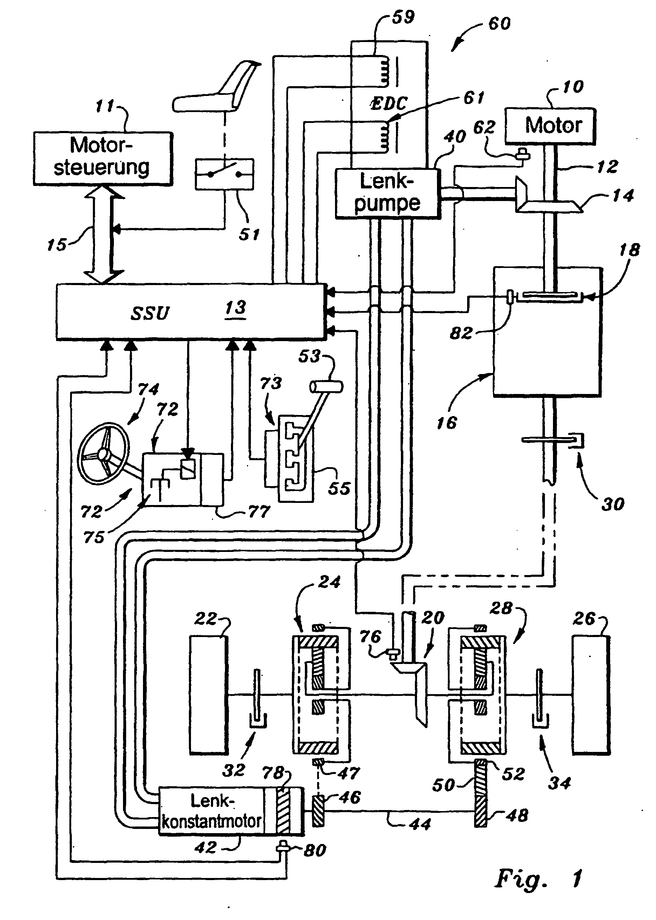

Bezugnehmend auf Fig. 1 besitzt ein Motor 10 eines Raupenfahrzeugs eine Antriebswelle 12, welche ein rechtwinkliges Kegelrad 14 sowie ein Getriebe 16, wie z. B. das bei der Produktion der John Deere Traktoren der 8000T Serie eingesetzte 16-Gang Getriebe, antreibt. Das Getriebe 16 enthält hydraulisch betätigte Kupplungen und Bremsen (nicht gezeigt), von denen verschiedenartige als Hauptkupplung 18 dienen und durch ein konventionelles Kupplungspedal sowie ein Gestänge (nicht gezeigt) betätigt werden. Der Motor 10 wird durch eine elektronische Motorsteuerungseinheit 11 gesteuert. Die elektronische Motorsteuerungseinheit 11 steht über einen Bus 15 mit einer Lenksystemeinheit (SSU) 13 in Verbindung.

Das Getriebe 16 treibt ein Kegelradgetriebe 20 an, welches wiederum ein linksspuriges Antriebsrad 22 über ein linkssteuerndes Planetengetriebe 24 und ein rechtsspuriges Antriebsrad 26 über ein rechtssteuerndes Planetengetriebe 28 antreibt. Die Lenk-Planetengetriebe 24 und 28 entsprechen vorzugsweise denen, die in der US-A-5,390,751 beschrieben wurden. Zusätzlich sind ausgelagerte Planetengetriebe (nicht gezeigt), wie sie in den John Deere 8000T Traktoren vorgesehen sind, zwischen den Lenk-Planetengetrieben und den entsprechenden Antriebsrädern angeordnet, jedoch nicht näher beschrieben, da diese nicht unmittelbar im Zusammenhang zu dem Gegenstand der hier beschriebenen Erfindung stehen. Eine Feststellbremse 30 ist mit der Abtriebswelle des Getriebes 16 verbunden, und linke und rechte Betriebsbremsen 32, 34 sind mit dem linken bzw. rechten Antriebsrad 22, 26 verbunden.

Das Kegelrad 14 treibt eine variable Verdrängungs-Lenkpumpe 40 an, wie z. B. die 75cc der 90'er Pumpenserie von Sauer-Sundstrand. Die Pumpe 40, treibt ihrerseits einen hydraulischen Lenkkonstantmotor 42 an, wie z.B. den 75cc der 90'er Motorserie, ebenfalls von Sauer-Sundstrand. Der Lenkkonstantmotor 42 treibt über eine Querwelle 44 und ein Zahnrad 46 ein Ringzahnrad 47 des linken Planetengetriebes 24, über die Querwelle 44 und ein Zahnrad 48 sowie ein Umkehrrad 50 ein Ringzahnrad 52 des rechten Planetengetriebes 28, an.

Die Lenkpumpe 40 besitzt eine Taumelscheibe (nicht gezeigt), deren Position durch ein Taumelscheibensteuerventil oder eine elektronische Verdrängungssteuerung (EDC) 60 gesteuert wird. Die EDC ist vorzugsweise eine zweistufige Vorrichtung, deren erste Stufe ein Klappenventil enthält, welches durch ein Magnetspulenpaar 59, 61 betrieben wird, und deren zweite Stufe eine Verstärkungsstufe für die Pumpe enthält, wie sie in der Serienfertigung der John Deere 8000T Raupenschlepper-Serie verwendet wird.

Ein Anwesenheitsschalter 51 liefert über ein Bus 15 ein Fahreranwesenheitssignal zur SSU 13. Ein Motordrehzahlsensor 62, wie z.B. ein handelsüblicher induktiver Aufnehmer, liefert ein Motordrehzahlsignal zur SSU 13. Die Magnetspulen 59, 61 des Steuerventils 60 werden durch ein von der SSU 13 generiertes pulsweitenmoduliertes (PWM) Pumpensteuersignal gesteuert.

Ein vom Fahrer betätigtes Lenkrad 74 ist vorzugsweise mit einem nicht-federzentrierten Eingabemechanismus 72, wie in der US-A-6,000,490 beschrieben, verbunden. Der Eingabemechanismus 72 beinhaltet eine elektromagnetisch gesteuerte Reibungsvorrichtung oder Bremse 75 und einen Rotationspositionsüberträger oder Inkrementgeber 77, wie z.B. ein handelsüblicher Grayhill 63R Sensor oder ein optischer OakGrigsby 900 Sensor. Der Inkrementgeber 77 liefert an die SSU 13 ein Lenkradpositionssignal, welches die Stellung des durch den Fahrer betätigten Lenkrades 74 entspricht. Der Inkrementgeber 77 generiert eine Vielzahl, vorzugsweise 128, Pulse pro Umdrehung des Lenkrades 74. Davon ausgehend generiert und aktualisiert die SSU 13 wiederholt einen Zählwert (COUNT), der die Anzahl der Inkrementgeberpulse repräsentiert, welche mit der entsprechenden Drehbewegung des Lenkrades 74 relativ zur Position des Lenkrades 74 in seiner Mittelstellung korrespondieren. Beispielsweise wird dann ein negativer Zählwert (COUNT) generiert, wenn das Lenkrad 74 entgegengesetzt zum Uhrzeigersinn aus seiner Mittelstellung verdreht wird, und ein positiver Zählwert (COUNT) wird generiert, wenn das Lenkrad 74 im Uhrzeigersinn aus seiner Mittelstellung verdreht wird. Somit besitzt der Zählwert (COUNT) eine Größe, die sich proportional zur Winkelstellung bezogen auf die Mittelstellung verhält, sowie ein Vorzeichen, welches die Richtung (im bzw. entgegen dem Uhrzeigersinn) von der Mittelstellung aus angibt.

Die SSU 13 empfängt ebenfalls Getriebeschaltbefehlsignale von einem Getriebeschalthebelmechanismus 73, wie er in der US-A-5,406,860 beschrieben wurde und bei der Serienfertigung der John Deere Traktoren der 8000 Serie verwendet wird. Der Getriebeschalthebelmechanismus 73 beinhaltet einen Schalthebel 53, der innerhalb einer Führung 55 in die Positionen vorwärts Hoch- und Herunterschalten, rückwärts Hoch- und Herunterschalten, Neutral und Parken zu schalten ist.

Ein Drehzahlsensor 76 des Antriebsstrangs, vorzugsweise ein differentieller Hall-Effekt-Drehzahlsensor, wie er bei der Serienfertigung der John Deere 8000T Traktoren eingesetzt wurde, ist in der Nähe des Kegelradgetriebes 20 montiert und versorgt die SSU 13 mit einem Antriebsstrangdrehzahlsignal oder einem Raddrehzahlsignal von variabler Frequenz. Ein Ringmagnet 78 drehfest an dem Lenkkonstantmotor 42 befestigt, und ein Hall-Effekt-Wandler 80, der in Nähe des Ringmagneten 78 montiert ist, liefert an die SSU 13 ein inkrementales Motorpositionssignal und ein Motordrehrichtungssignal. Ein Paar von Kupplungszustandsschaltern 82 sind im Getriebe 16 angeordnet und steht operativ mit dem Gestänge (nicht gezeigt), welches das Kupplungspedal (nicht gezeigt) mit der Hauptkupplung 18 verbindet, in Verbindung und liefert der SSU 13 ein Kupplungszustandssignal.

Die SSU 13 beinhaltet einen handelsüblichen Mikroprozessor (nicht gezeigt) der die Pumpensteuersignale generiert, welche dann an die Magnetspulen 59, 61 des Steuerventils 60 weitergeleitet werden. Vorzugsweise werden die Pumpenkontrollsignale als Funktion des Zählwertes (COUNT) generiert, der als Ergebnis von der SSU 13 bei Ausführen des Hauptkontrollalgorithmus (nicht gezeigt) geliefert wird, so wie es in der EP-A-1106477 beschrieben wurde, auf deren Offenbarung hiermit Bezug genommen wird.

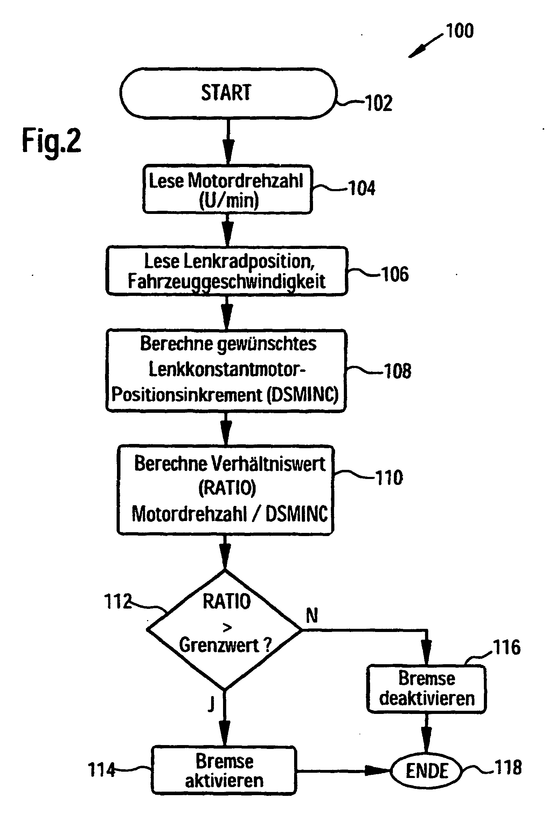

Gemäß der vorliegenden Erfindung führt die SSU 13 vorzugsweise alle 20 Millisekunden zusätzlich eine Subroutine oder einen Algorithmus 100 aus, welcher in Fig. 2 dargestellt ist. Der Algorithmus startet bei Schritt 102. Schritt 104 liest das Motordrehzahlsignal (U/min.) des Drehzahlsensors 62 ein. Schritt 106 liest das Lenkrad-Positionssignal bzw. den Zählwert (COUNT) des Inkrementgebers 77 sowie das Fahrzeuggeschwindigkeitssignal (VEHSPD, in Hz) vom Drehzahlsensor 76 ein. Schritt 108 berechnet ein gewünschtes oder vorgegebenes Lenkkonstantmotor-Positionsinkrement (DSMINC) entsprechend der folgenden Gleichung:

$$DSMINC = (COUNT \times VEHSPD) / 500.$$

Schritt 110 berechnet ein Verhältniswert (RATIO) mittels Division der Motordrehzahl durch das gewünschte Lenkkonstantmotor-Positionsinkrement. Wenn RATIO größer als ein Schwell- oder Grenzwert, wie z. B. 11 ist, dann leitet Schritt 112 die Routine zu Schritt 114. Schritt 114 aktiviert die Reibungsvorrichtung oder Bremse 75 des Lenk-Eingabemechanismus 72, so dass der Fahrer fühlt, dass es zunehmend schwerer wird, das Lenkrad 74 zu drehen und so dass dem Fahrer ein Hinweis gegeben wird, dass das Ende des Lenkpumpenhubes erreicht wird, wenn sich das Getriebe 16 in einem höheren Übersetzungsverhältnis befindet.

Wenn im Schritt 112 RATIO nicht größer als der Grenzwert ist, dann leitet Schritt 112 die Routine zu Schritt 116, welcher die Reibungsvorrichtung oder Bremse 75 deaktiviert.

Nach den Schritten 114 oder 116 endet die Routine mit Schritt 118.

Weil die Routine periodisch wiederholt wird, arbeitet diese so, dass im Ergebnis eine Umwandlung des Lenkkonstantmotor-Positionsinkrementsollwertes in einen Geschwindigkeitswert stattfindet. Somit berechnet die Routine im Ergebnis eine vorgegebene Lenkkonstantmotordrehzahl und generiert einen Verhältniswert (RATIO), der das Verhältnis von Motordrehzahl zur gewünschten Lenkkonstantmotordrehzahl repräsentiert. Somit arbeitet die Routine derart, dass ein Motordrehzahlsignal generiert wird, ein Lenkkonstantmotor-Geschwindigkeitssollwert generiert wird, ein Verhältniswert (RATIO) generiert wird, der ein Verhältnis zwischen Motordrehzahl und gewünschter Lenkkonstantmotordrehzahl repräsentiert, ein Vergleich zwischen Verhältniswert (RATIO) und Grenzwert durchgeführt wird und die variable Lenk-Reibungsvorrichtung oder Bremse 75 als Funktion der Beziehung zwischen Verhältniswert (RATIO) und Grenzwert betätigt wird.

Im Speziellen wird die variable Lenk-Reibungsvorrichtung oder Bremse 75 auf ihre hohen Reibungszustände gebracht, wenn der Verhältniswert (RATIO) oberhalb des Grenzwertes liegt, und ausgeschaltet, sofern der Verhältniswert (RATIO) nicht oberhalb des Grenzwertes liegt.

Vorzugsweise wird die Lenk-Reibungsvorrichtung oder Bremse 75 nur dann in den hohen Reibungszustand gebracht, wenn das Lenkrad 74 in der Absicht eine engere Kurve zu fahren (der Absolutwert vom Zählwert (COUNT) steigt an) betätigt wird. Hingegen, wenn der Absolutwert vom Zählwert (COUNT) abnimmt, wird die Lenk-Reibungsvorrichtung oder Bremse 75 ausgeschaltet oder auf ihren niedrigen Reibungszustand gebracht.

Die Umsetzung des Flussdiagramms in eine Standardsprache zur Implementierung des im Flussdiagramm beschriebenen Algorithmus in einen digitalen Rechner oder Mikroprozessor kann von einem Fachmann mit normalen Kenntnissen auf diesem Gebiet in einfacher Art und Weise erfolgen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter den Schutzumfang der vorliegenden Erfindung fallen, der in den nachliegenden Ansprüchen festgelegt ist.

## Patentansprüche

1. Raupenfahrzeug mit einem elektrohydraulischen Fahr/Lenksystem, welches ein Lenkrad (74) und einen Motor (10) enthält, der über ein Getriebe (16) mit mehreren Übersetzungsverhältnissen mit einem Differential-Raupenantriebsmechanismus gekoppelt ist und durch den eine hydraulische Lenkverstellpumpe (40) angetrieben wird, die einen hydraulischen Lenkkonstantmotor (42) antreibt, und mit einem Steuersystem, das aufgrund der Signale eines die Position des Lenkrades (74) erfassenden Rotationspositionsübertragers (77) anspricht und die Verdrängung der Lenkpumpe (40) steuert, **dadurch gekennzeichnet, dass** Rückmeldemittel vorgesehen sind, die in Verbindung mit einer mit dem Lenkrad (74) gekoppelten Reibungsvorrichtung (75) der Bedienperson melden, wenn das Maximum einer Lenkpumpenverstellung erreicht ist während sich das Getriebe (16) in einem seiner höheren Übersetzungsverhältnisse befindet.

2. Raupenfahrzeug nach Anspruch 1, **dadurch gekennzeichnet, dass** das Lenkrad (74) mit einer variablen Reibungsvorrichtung (75) gekoppelt ist, welche eine variable Reibungskraft produziert und damit einer Drehbewegung des Lenkrades (74) entgegenwirkt, wobei die Rückmeldemittel die variable Reibungsvorrichtung (75) in einen hohen Reibungszustand setzen, wenn der besagte Lenkpumpenverdrängungsgrenzwert erreicht wird, während sich das Getriebe in einem seiner höheren Übersetzungsverhältnisse befindet.

3. Raupenfahrzeug nach Anspruch 1 oder 2, mit einem Steuersystem gemäß einem der Ansprüche 4 bis 11.

4. Steuersystem für ein Raupenfahrzeug nach einem der Ansprüche 1 bis 3 mit einem Rotationspositionsübertrager (77), der die Position des Lenkrades (74) erfasst, wobei das Steuersystem Signale, die der Lenkradposition entsprechen, zur Steuerung der Lenkpumpenverstellung abgibt, **dadurch gekennzeichnet, dass** Rückmeldemittel vorgesehen sind, die der Bedienungsperson zu erkennen geben, wenn das Maximum der Lenkpumpenverstellung erreicht ist und sich das Getriebe (16) in einem seiner höheren Übersetzungsverhältnisse befindet.

5. Steuersystem nach Anspruch 4, **dadurch gekennzeichnet, dass** die Rückmeldemittel Signale an die variable Reibungsvorrichtung (75) abgeben, um diese in einen hohen Reibzustand zu versetzen, sofern der Maximalwert der Lenkpumpenverstellung erreicht ist und sich das Getriebe in einem seiner höheren Übersetzungsverhältnisse befindet.

6. Steuersystem nach Anspruch 4 oder 5, **dadurch gekennzeichnet, dass** die Rückmeldemittel einen Motordrehzahlsensor (62), einen Verhältnisgenerator und einen Komparator enthalten, wobei der Motordrehzahlsensor (62) ein Motordrehzahlsignal generiert, der Verhältnisgenerator einen Verhältniswert (RATIO) generiert, welcher das Verhältnis der Motordrehzahl zu einem Lenkkonstantmotor-Positionsinkrementsollwert (DSMINC) wiedergibt, und der Komparator den besagten Verhältniswert (RATIO) mit einem vorgebbaren Grenzwert vergleicht und die variable Reibungsvorrichtung (75) als Funktion der Beziehung zwischen dem Verhältniswert (RATIO) und besagtem Grenzwert steuert.

7. Steuersystem nach Anspruch 6, **dadurch gekennzeichnet, dass** der Komparator Signale an die variable Reibungsvorrichtung (75) abgibt, um diese auf einen hohen Reibungszustand zu setzen, wenn der Verhältniswert (RATIO) den besagten Grenzwert erreicht.

8. Steuersystem nach einem der vorstehenden Ansprüche 4 bis 7, **dadurch gekennzeichnet, dass** ein Lenkradpositionssensor (77), der ein Lenkradpositionssignal generiert, und ein Drehzahlsensor (76), der ein Fahrzeuggeschwindigkeitssignal generiert, vorgesehen sind, und dass der Lenkkonstantmotor-Positionsinkrementsollwert eine Funktion aus Lenkradpositionssignal und Fahrzeuggeschwindigkeitssignal ist.

9. Steuersystem nach Anspruch 8, **dadurch gekennzeichnet, dass** ein Rechner vorgesehen ist, der den Lenkkonstantmotor-Positionsinkrementsollwert als Produkt aus Lenkradpositionssignal und Fahrzeuggeschwindigkeitssignal berechnet.

10. Steuersystem nach Anspruch 9, **dadurch gekennzeichnet, dass** der berechnete Produktwert durch eine vorgebbare Konstante dividiert bzw. mit einer vorgebbaren Konstante multipliziert wird.

11. Steuersystem nach einem der Ansprüche 4 bis 10, **dadurch gekennzeichnet, dass** Signale an die variable Reibungsvorrichtung (75) abgegeben werden, die diese in einen hohen Reibungszustand bringen, wenn der Verhältniswert (RATIO) oberhalb des Grenzwertes liegt, und die die Reibungsvorrichtung (75) ausschalten, wenn der Verhältniswert (RATIO) nicht oberhalb des Grenzwertes liegt.

12. Verfahren zur Steuerung eines Fahr-/Lenksystems für ein Raupenfahrzeug, welches einen Motor (10) enthält, der über ein Getriebe (16) mit mehreren Übersetzungsverhältnissen mit einem Differential-Raupenantriebsmechanismus gekoppelt ist und durch den eine hydraulische Lenkverstellpumpe (40) angetrieben wird, die einen hydraulischen Lenkkonstantmotor (42) antreibt, wobei die Lenkverstellpumpe (40) entsprechend der Position eines Lenkrades (74) anspricht, welches mit einer Reibungsvorrichtung (75) gekoppelt ist, welche ihrerseits eine variable Reibungskraft produziert und damit einer Drehbewegung des Lenkrades (74) entgegenwirkt, **dadurch gekennzeichnet, dass** ein Motordrehzahlsignal und ein Lenkkonstantmotor-Positionsinkrementsollwert (DSMINC) periodisch generiert werden, und dass ein Verhältniswert (RATIO) mittels Division der Motordrehzahl durch den Lenkkonstantmotor-Positionsinkrementsollwert periodisch gebildet und der besagte Verhältniswert (RATIO) mit einem vorgebbaren Grenzwert periodisch verglichen wird, wobei die Reibungsvorrichtung (75) entsprechend einer Funktion des Verhältniswertes (RATIO) und besagten Grenzwertes gesteuert wird.

13. Verfahren nach Anspruch 12, **dadurch gekennzeichnet, dass** der Lenkkonstantmotor-Positionsinkrementsollwert (DSMINC) als Funktion eines Lenkrad-Positionssignals bzw. Zählwertes (COUNT) und eines Fahrzeuggeschwindigkeitssignals (VEHSPD) berechnet wird.

14. Verfahren nach Anspruch 13, **dadurch gekennzeichnet, dass** der Lenkkonstantmotor-Positionsinkrementsollwert (DSMINC) entsprechend folgender Gleichung berechnet wird: DSMINC = (COUNT x VEHSPD) / K, wobei K eine Konstante ist.

15. Verfahren nach einem der Ansprüche 12 bis 14, **dadurch gekennzeichnet, dass** die Reibungsvorrichtung (75) auf einen hohen Reibungszustand gebracht wird, wenn der Verhältniswert (RATIO) oberhalb des Grenzwertes liegt, und dass die Reibungsvorrichtung (75) auf einen niedrigen Reibungszustand gebracht wird, wenn der Verhältniswert (RATIO) nicht oberhalb des Grenzwertes liegt.

**Claims**

1. A tracked vehicle with an electro-hydraulic drive/ steering system which includes a steering wheel (74) and an engine (10), which is coupled to a differential track drive mechanism through a transmission (16) with a plurality of transmission ratios and through which a variable displacement hydraulic steering pump (40) is driven, which pump drives a constant displacement hydraulic steering motor (42), and with a control system which responds on the basis of the signal of a rotary position transducer (77) detecting the position of the steering wheel (74) and controls the displacement of the steering pump (40), **characterized in that** feedback means are provided to inform the operator, in conjunction with a friction device (75) coupled to the steering wheel (74), when the maximum displacement of a steering pump is attained while the transmission (16) is in one of its higher transmission ratios.

2. A tracked vehicle according to claim 1, **characterized in that** the steering wheel (74) is coupled to a variable friction device (75) which produces a variable friction force and thus counteracts rotary movement of the steering wheel (74), wherein the feedback means set the friction device (75) in a high friction state when the said steering pump displacement limit is attained, while the transmission is in one of its higher transmission ratios.

3. A tracked vehicle according to claim 1 or 2, with a control system according to any of claims 4 to 11.

4. A control system for a tracked vehicle according to any of claims 1 to 3, with a rotary position transducer (77) which detects the position of the steering wheel (74), wherein the control system issues signals which correspond to the steering wheel position for controlling the steering pump displacement, **characterized in that** feedback means are provided to inform the operator when the maximum of the steering pump displacement is attained and the transmission (16) is in one of its higher transmission ratios.

5. A control system according to claim 4, **characterized in that** the feedback means supply signals to the friction device (75), in order to set this in a high friction state insofar as the maximum value of the steering pump displacement is attained and the transmission is in one of its higher transmission ratios.

6. A control system according to claim 4 or 5, **characterized in that** the feedback means include and engine speed sensor (62), a ratio generator and a comparator, wherein the engine speed sensor (62) generates an engine speed signal, the ratio generator generates a ratio value (RATIO) which reproduces the ratio of the engine speed to a constant displacement steering pump position increment set point value (DSMINC) and the comparator compares the said ratio value (RATIO) with a predetermined limit value and controls the variable friction device (75) as a function of the relationship between the ratio value (RATIO) and the said limit value.

7. A control system according to claim 6, **characterized in that** the comparator provides signals to the variable friction device (75), in order to set this in a high friction state when the ratio value (RATIO) reaches the said limit value.

8. A control system according to any of the preceding claims 4 to 7, **characterized in that** a steering wheel position sensor (77), which generates a steering wheel position signal, and a speed of rotation sensor (76), which generates a vehicle speed signal are provided, and **in that** the constant displacement steering motor position increment set point value is a function of the steering wheel position signal and the vehicle speed signal.

9. A control system according to claim 8, **characterized in that** a computer is provided and computes the constant displacement steering motor position increment set point value as the product of the steering wheel position signal and the vehicle speed signal.

10. A control system according to claim 9, **characterized in that** the computed product value is divided by a predetermined constant or is multiplied by a predetermined constant.

11. A control system according to any of claims 4 to 10, **characterized in that** signals are applied to the variable friction device (75) which bring this into a high friction state when the ratio value (RATIO) lies above a limit value and which switch off the friction device (75) when the ratio value (RATIO) is not above the limit value.

**12.** A method of controlling a drive/steering system for a tracked vehicle, which includes and engine (10), which is coupled through a transmission (16) with a plurality of transmission ratios to a differential track drive mechanism and through which a variable displacement hydraulic steering pump (40) is driven, which pump drives a hydraulic constant displacement motor (42), wherein the variable displacement steering pump (40) responds in accordance with the position of a steering wheel (74), which is coupled to a friction device (75) which for its part produces a variable friction force and thereby counteracts rotary motion of the steering wheel (74), **characterized in that** an engine speed signal and a constant displacement steering motor position increment set point value (DSMINC) are periodically generated and **in that** a ratio value (RATIO) is periodically formed by division of the engine speed by the constant displacement steering motor position increment set point value and the said ratio value (RATIO) is periodically compared with a predetermined limit value, wherein the friction device (75) is controlled in accordance with a function of the ratio value (RATIO) and the said limit value.

**13.** A method according to claim 12, **characterized in that** the constant displacement steering motor position increment set point value (DSMINC) is computed as a function of a steering wheel position signal or count value (COUNT) and a vehicle speed signal (VEHSPD).

**14.** A method according to claim 13, **characterized in that** the constant displacement steering motor position increment set point value (DSMINC) is computed in accordance with the following equation:

$$DSMINC = (COUNT \times VEHSPD) / K,$$

wherein K is a constant.

**15.** A method according to any of claims 12 to 14, **characterized in that** the friction device (75) is brought to a high friction state when the ratio value (RATIO) lies above the limit value and **in that** the friction device (75) is brought to a low friction state when the ratio value (RATIO) does not lie above the limit value.

**Revendications**

**1.** Véhicule à chenilles avec un système de conduite/ guidage électrohydraulique, qui comporte un volant (74) et un moteur (10), qui est couplé à un mécanisme d'entraînement différentiel des chenilles par l'intermédiaire d'une boîte à vitesses (16) à plusieurs rapports et qui actionne une pompe de réglage du guidage (40) hydraulique actionnant un moteur hydraulique de guidage à cylindrée constante (42), et avec un système de commande qui est activé par des signaux d'un transmetteur de position de rotation (77) enregistrant la position du volant (74) et qui commande le déplacement de la pompe de guidage (40), **caractérisé en ce qu'**il est prévu des moyens de réponse qui, en liaison avec un dispositif de friction (75) couplé avec le volant (74), signalent à la personne de service que le maximum du déplacement de la pompe de guidage est atteint alors que la boîte de vitesses (16) est dans l'un de ses rapports élevés.

**2.** Véhicule à chenilles selon la revendication 1, **caractérisé en ce que** le volant (74) est couplé à un dispositif de friction variable (75), qui produit une force de frottement variable et s'oppose ainsi à un mouvement de rotation du volant (74), les moyens de réponse amenant le dispositif de friction variable (75) dans un état de friction élevé lorsque ladite valeur limite de déplacement de la pompe est atteinte, alors que la boîte de vitesses (16) est dans l'un de ses rapports élevés.

**3.** Véhicule à chenilles selon la revendication 1 ou 2, avec un système de commande selon l'une quelconque des revendications 4 à 11.

**4.** Système de commande pour un véhicule à chenilles selon l'une quelconque des revendications 1 à 3, comportant un transmetteur de position de rotation (77), qui enregistre la position du volant (74), le système de commande émettant des signaux correspondants à la position du volant pour commander le déplacement de la pompe de réglage du guidage, **caractérisé en ce qu'**il est prévu des moyens de réponse qui signalent à la personne de service lorsque le maximum de déplacement de la pompe de réglage du guidage est atteint et lorsque la boîte de vitesses (16) est dans l'un de ses rapports élevés.

**5.** Système de commande selon la revendication 4, **caractérisé en ce que** les moyens de réponse émettent des signaux vers le dispositif de friction variable (75) pour amener celui-ci dans un état de friction élevé, pour autant que la valeur maximale du déplacement de la pompe de réglage du guidage soit atteinte et que la boîte de vitesses soit dans l'un de ses rapports élevés.

**6.** Système de commande selon la revendication 4 ou 5, **caractérisé en ce que** les moyens de réponse comportent un capteur de vitesse de rotation du moteur (62), un générateur de rapport et un comparateur, le capteur de vitesse de rotation (62) générant un signal de vitesse de rotation, le générateur de rapport générant un rapport (RATIO), qui reproduit le rapport entre la vitesse de rotation du moteur et une valeur théorique d'incrémentation de la position du moteur à cylindrée constante (DSMINC), et le comparateur comparant le rapport (RATIO) avec une valeur limite prédéfinissable et commandant le dispositif de friction variable (75) en fonction de la relation entre le rapport (RATIO) et ladite valeur limite.

7. Système de commande selon la revendication 6, **caractérisé en ce que** le comparateur émet des signaux vers le dispositif de friction variable (75) pour amener celui-ci à un état de friction élevé lorsque le rapport (RATIO) a atteint ladite valeur limite.

8. Système de commande selon l'une quelconque des revendications 4 à 7, **caractérisé en ce qu'**il est prévu un capteur de position du volant (77), qui génère un signal de position du volant, et un capteur de vitesse de rotation (76), qui génère un signal de vitesse du véhicule, et **en ce que** la valeur théorique d'incrémentation de la position du moteur à cylindrée constante est une fonction à partir du signal de position du volant et du signal de vitesse du véhicule.

9. Système de commande selon la revendication 8, **caractérisé en ce qu'**il est prévu un calculateur, qui calcule la valeur théorique d'incrémentation de la position du moteur à cylindrée constante en tant que produit du signal de position du volant et du signal de vitesse du véhicule.

10. Système de commande selon la revendication 9, **caractérisé en ce que** la valeur du produit calculé est divisée par une constante prédéfinissable ou est multipliée par une constante prédéfinissable.

11. Système de commande selon l'une quelconque des revendications 4 à 10, **caractérisé en ce que** des signaux sont émis vers le dispositif de friction variable (75), lesquels amènent celui-ci dans un état de friction élevé lorsque le rapport (RATIO) est supérieur à la valeur limite, et lesquels désactivent le dispositif de friction (75) lorsque le rapport (RATIO) n'est pas supérieur à la valeur limite.

12. Procédé de commande d'un système de conduite/guidage pour un véhicule à chenilles, qui comporte un moteur (10), qui est couplé à un mécanisme d'entraînement différentiel des chenilles par l'intermédiaire d'une boîte à vitesses (16) à plusieurs rapports et qui actionne une pompe de réglage hydraulique du guidage (40), qui actionne un moteur à cylindrée constante hydraulique (42), la pompe de réglage du guidage (40) réagissant en fonction de la position d'un volant (74), qui est couplé à un dispositif de friction (75) qui, pour sa part, produit une force de frottement variable et s'oppose ainsi à un mouvement de rotation du volant (74), **caractérisé en ce qu'**un signal de vitesse de rotation du moteur et une valeur théorique d'incrémentation de la position du moteur à cylindrée constante (DSMINC) sont générés périodiquement, et **en ce qu'**un rapport (RATIO) est formé périodiquement par la division de la vitesse de rotation du moteur par la valeur théorique d'incrémentation de la position du moteur à cylindrée constante et ledit rapport (RATIO) est comparé périodiquement à une valeur limite prédéterminée, le dispositif de friction (75) étant commandé conformément à une fonction du rapport (RATIO) et de ladite valeur limite.

13. Procédé selon la revendication 12, **caractérisé en ce que** la valeur théorique d'incrémentation de la position du moteur à cylindrée constante (DSMINC) est calculée comme fonction d'un signal de position du volant ou d'une valeur de comptage (COUNT) et d'un signal de vitesse du véhicule (VEHSPD).

14. Procédé selon la revendication 13, **caractérisé en ce que** la valeur théorique d'incrémentation de la position du moteur à cylindrée constante (DSMINC) est calculée conformément à l'équation suivante : DSMINC = (COUNT x VEHSPD) / K, dans laquelle K est une constante.

15. Procédé selon l'une quelconque des revendications 12 à 14, **caractérisé en ce que** le dispositif de friction (75) est amené à un état de friction élevé lorsque le rapport (RATIO) est supérieur à la valeur limite, et **en ce que** le dispositif de friction (75) est amené à un état de friction faible lorsque le rapport (RATIO) n'est pas supérieur à la valeur limite.

Fig. 1

**Fig.2**

~100

START ~102

Lese Motordrehzahl
(U/min) ~104

Lese Lenkradposition,
Fahrzeuggeschwindigkeit ~106

Berechne gewünschtes
Lenkkonstantmotor-
Positionsinkrement (DSMINC) ~108

Berechne Verhältniswert
(RATIO) ~110
Motordrehzahl / DSMINC

112~ RATIO
>
Grenzwert ?

N

116

Bremse
deaktivieren

J

114~ Bremse
aktivieren

ENDE ~118